# EUROPÄISCHE PATENTSCHRIFT

(11) **EP 3 738 907 B1**
(45) Veröffentlichungstag und Bekanntmachung des Hinweises auf die Patenterteilung: **19.02.2025**
(21) Anmeldenummer: 20173056.1
(22) Anmeldetag: 05.05.2020
(51) Int. Cl.: B65G 1/04, B65G 1/06, B65G 1/137

(54) **REGALLAGERSYSTEM MIT MEHREBENEN LAGERREGALEN**
SHELF STORAGE SYSTEM WITH MULTI-LEVEL SHELVES
SYSTÈME D'ENTREPÔT À RAYONNAGE POURVU DE RAYONNAGE D'ENTREPÔT À PLUSIEURS NIVEAUX

(30) Priorität: 14.05.2019 DE 102019112642
(43) Veröffentlichungstag der Anmeldung: 18.11.2020
(73) Patentinhaber: Dematic GmbH, 63150 Heusenstamm (DE)
(72) Erfinder: Schreiber, Torsten, 04463 Großpösna (DE)
(74) Vertreter: Moser Götze & Partner Patentanwälte mbB

(56) Entgegenhaltungen:
- EP-A1- 3 147 237
- EP-B1- 2 794 431
- WO-A1-2015/027261
- WO-A1-2016/033628
- DE-A1- 102012 107 176
- DE-U1- 202014 100 476

## Beschreibung

Die Erfindung betrifft ein Regallagersystem mit mehrebenen Lagerregalen, die zwischen sich eine Gasse definieren, in der in den Lagerebenen Shuttles entlang der Regale als Bediengeräte zum Ein- und Auslagern von Ladegütern in die Regale fahren, wobei innerhalb der Grundfläche der Regale einer Gasse mindestens ein Vertikallift so angeordnet ist, dass die Shuttles auf Schienen entlang der der Gasse zugewandten Regalvorderseiten an dem Vertikallift vorbeifahren können und über einen neben dem Vertikallift angeordneten Pufferförderer Ladegut abgeben bzw. aufnehmen können, wobei der Pufferförderer Ladegut an den Lift weiterfördert bzw. vom Lift übernimmt, nach Anspruch 1.

Figur 8 der AT 516231 A1 offenbart einen einseitig neben einem Lift mit reversierbarem Liftförderer angeordneten ebenfalls reversierbaren Puffferförderer.

Aus der EP 2 794 431 B1, welche ein Regallagersystem nach dem Oberbegriff des Anspruchs 1 offenbart, ist es bekannt, in einem Regallagersystem mit Lagerregalen die zwischen sich eine Gasse definieren, in der in den Lagerebenen Shuttles entlang der Regale als Bediengeräte fahren, vertikal Lifte innerhalb der Regale so anzuordnen, dass die Shuttles an diesen einerseits vorbeifahren können und andererseits über beidseitig der Lifte daneben angeordneten Pufferförderern Ladegut abgeben bzw. aufnehmen können, das an den Lift weitergefördert wird bzw. vom Lift stammt. In einer Lager-Anbindungsebene, d. h. der Zuführung zu dem Lager bzw. Abführung von dem Lager, wird der Lift dagegen zwischen einem Einlagerungsförderer und einem Auslagerungsförderer positioniert. Somit ist es möglich, dass einerseits die Shuttles vom Betrieb des Lifts entkoppelt werden und andererseits der Lift gleichzeitig Ladegüter aufnehmen und abgeben kann.

Demgegenüber besteht die Aufgabe der vorliegenden Erfindung darin, ein solches Lagersystem insbesondere in der oder den Lager-Anbindungsebene(n) zu vereinfachen und somit Platz zu sparen.

Diese Aufgabe wird durch das in Anspruch 1 wiedergegebene Regallagersystem gelöst.

Vorteilhafte Ausgestaltungen ergeben sich aus den Unteransprüchen.

Erfindungsgemäß ist erkannt worden, dass, wenn lediglich auf einer Seite des Lifts in einer Ebene Ladegüter bzw. Ladehilfsmittel aufgegeben und auch aufgenommen werden, eine platzsparende Anordnung möglich ist, die sich auch in einer einfacheren Anbindung von Kommissionierplätzen in der Lager-Anbindungsebene äußert. Zudem werden kürzere Zykluszeiten ermöglicht, was zu höherer Anlagenleistung führt.

Mit anderen Worten, der Pufferförderer ist nicht mehr beidseitig des Liftes, sondern nur noch einseitig daneben als Doppelförderer angeordnet und weist im Gegenzug eine Längsteilung derart auf, dass eine Längshälfte zum Lift hin und die andere Längshälfte vom Lift wegfördert.

Dies kann parallel erfolgen, d.h. die Hälften des Doppelförderers sind unabhängig voneinander.

Der Pufferförderer ist also durch zwei halb so schmale Förderer als Doppelförderer ersetzt, so dass diese nebeneinander platziert keinen größeren Platzbedarf erzeugen. Die Breite der zwei (oder mehr) nebeneinander angeordneten Förderer hängt minimal von der Fördergutbreite und als max. limitierendes Element von dem zur Verfügung stehenden Platz, z. B. Regaltiefe ab. Innerhalb dieser Parameter können die zwei (oder mehr) Förderer eingebaut werden.

Denkbar ist also auch, dass der Doppelförderer ein Mehrfachförderer mit mehr als zwei parallelen Förderern ist, z. B. dreifach oder vierfach.

Ermöglicht wird dies unter anderem durch die Ausrichtung der Ladegüter bzw. Ladehilfsmittel mit der Schmalseite in Förderrichtung oder alternativ der alleinigen Verwendung von schmalen Ladegütern bzw. schmalen Ladehilfsmitteln für die Ladegüter, so dass sie weniger Breite benötigen.

Erfindungsgemäß weist der Lift einen reversierbaren Liftförderer auf. In einer Regalgasse können ein oder mehrere Lifte rechts bzw. links von der Regalgasse angeordnet werden. Diese können sowohl an den Enden als auch in den Regalen entlang der Regalgasse angeordnet sein.

Die Doppelförderer fluchten also mit den Hälften des Lifts bzw. Liftförderers in Richtung der Längsausrichtung des Regals bzw. Gasse in dem Sinne, dass die Hälften des Doppelförderers mit den "schmalen" (virtuellen) Hälften des Lifts fluchten, wenn sich diese auf gleicher Höhe befinden.

Der Lift bzw. dessen Liftförderer können nicht nur virtuell geteilt sein, sondern auch physikalisch zwei getrennt angetriebene Hälften aufweisen (siehe unten).

In den Lagerebenen können die Pufferförderer dagegen - wie bekannt - beidseitig angeordnet sein oder alternativ im Sinne der Neuerung ebenfalls nur einseitig. In der oder den Lager-Anbindungsebene(n) können ebenfalls Pufferförderer in der Ver- und/oder Entsorgungsstrecke angeordnet sein.

In beiden Fällen kann das Shuttle die Ladegüter in geeignete Tiefen auf dem Pufferförderer ablegen bzw. von dort übernehmen, z. B. mittels der bekannten Teleskoparme. Eine Aufnahme bzw. Abgabe von Ladegütern von bzw. an die Pufferförderer kann auch parallel durch mehrere Shuttles der gleichen Lagerebene erfolgen.

In der Lager-Anbindungsebene können so auch Kommissionierstationen mittels schlanker und somit platzsparender Streckenführung (direkt an die Gassen bzw. Regale) über den Doppelförderer angeschlossen werden.

Denkbar ist es auch, dass die Längshälften des Doppelförderers mittels einer Führung getrennt sind.

Der Liftförderer ist erfindungsgemäß virtuell oder physikalisch durch Führungen entsprechend der Doppelfördererteilung geteilt. Auch denkbar und nicht erfindungsgemäß ist der Einsatz zweier paralleler unabhängiger Förderer.

Zwischen dem Liftförderer und dem Doppelförderer können Schrägrollenförderer angeordnet sein, um die Ladegüter je nach Förderrichtung auf die gewünschte Längshälfte auszurichten.

Weitere Details der Erfindung ergeben sich aus der nachfolgenden Beschreibung von Ausführungsbeispielen anhand der Zeichnung, in der
Fig. 1 eine schematische Ansicht auf eine Ein- und Auslagerungsebene eines Lagers im Bereich der Anbindung eines Lagerlifts an die Ein- und Auslagerfördertechnik;
Fig. 2 eine schematische Ansicht auf eine Lagerebene des Lagers aus Figur 1 im Bereich des Lagerlifts und
Fig. 3 eine schematische Ansicht auf eine Kommissionierebene des Lagers aus Figur 1 im Bereich der Anbindung des Lagerlifts an Kommissionierstationen zeigen.

In den Figuren ist ein als Ganzes mit 1 bezeichnetes Regallagersystem mit mehrebenen Lagerregalen 2, die zwischen sich eine Gasse 3 definieren, in der in den Lagerebenen Shuttles entlang der Regale als Bediengeräte zum Ein- und Auslagern von Ladegütern L in die Regale fahren gezeigt.

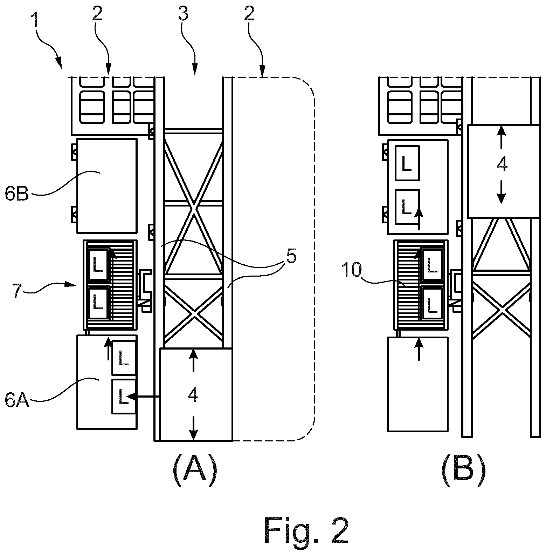

Innerhalb der Grundfläche der Regale 2 einer Gasse 3 ist mindestens ein Vertikallift 7 so angeordnet, dass die Shuttles 4 auf Schienen 5 entlang der der Gasse 3 zugewandten Regalvorderseiten an dem Vertikallift 7 vorbeifahren können und jeweils über einen neben dem Vertikallift 7 angeordneten Pufferförderer 6A Ladegut abgeben bzw. auf der anderen Seite angeordneten Pufferförderer 6B Ladegut aufnehmen können, wie dies in Figur 2 in den Abbildungen A und B dargestellt ist.

Mit anderen Worten in der Lagerebene (Figur 2) ist der Vertikallift 7 zwischen zwei Pufferförderern 6A, B innerhalb des Regals 2 angeordnet.

Der jeweilige Pufferförderer 6A, B fördert Ladegut L an den Lift 7 weiter bzw. übernimmt vom Lift 7 Ladegut. Dies entkoppelt die Bewegung des Lifts 7 von derjenigen der Shuttle 4.

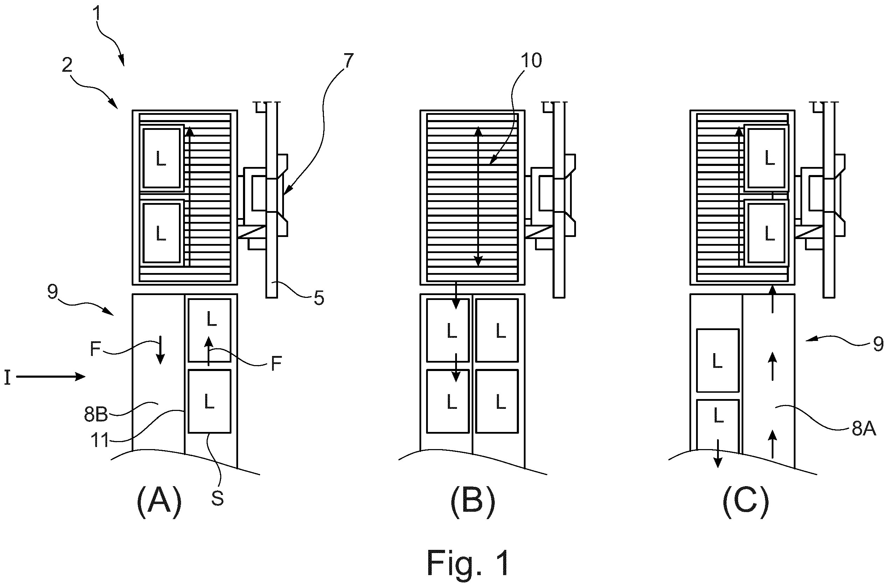

Erfindungsgemäß ist das System derart ausgestaltet, dass in der Lager-Anbindungsebene (vgl. Figur 1) lediglich auf einer Seite I des Lifts 7 Ladegüter L aufgegeben und auch aufgenommen werden.

Dazu sind der Einlagerungsförderer 8A und der Auslagerungsförderer 8B der Lager-Anbindungsebene beide einseitig neben dem Lift 7 als ein einziger über eine Führung 11 getrennter Doppelförderer 9 ausgebildet.

Der Doppelförderer 9 weist zur unabhängigen Förderung der Ladegüter L eine Längsteilung derart auf, dass eine Längshälfte bildender Einlagerungsförderer 8A zum Lift 7 hin und die andere Längshälfte bildender Auslagerungsförderer 8B vom Lift 7 weg in derselben Ebene fördert.

Somit werden auf dem Doppelförderer 9 Ladegüter L mit der Schmalseite S in Förderrichtung F befördert.

Es ist somit möglich in der Aufstandsfläche nur eines Regals 2 sowohl eine Ein- als auch Auslagerung zu bewerkstelligen. Bisher üblich ist die Verwendung von einem Regal pro Gasse als Einlagerungsanbindung und dem anderen Regal als Auslagerungsanbindung.

Der Lift 7 weist einen reversierbaren Liftförderer 10 auf, so dass die Ladegüter L auch in der Anbindungsebene der Figur 1 einseitig aufnehmbar und abgebbar sind, wie dies anhand der Figur in den Darstellungen A, B und C gezeigt ist.

Der Liftförderer 10 ist vorliegend nur virtuell entsprechend der Doppelfördererteilung geteilt, ähnlich wie die Pufferförderer 6A, 6B in der Lagerebene.

Ein Shuttle 4 darf die Ladegüter L also nur einfach tief auf den Pufferförderer 6A abgeben und dagegen doppelt so tief von dem Pufferförderer 6B aufnehmen.

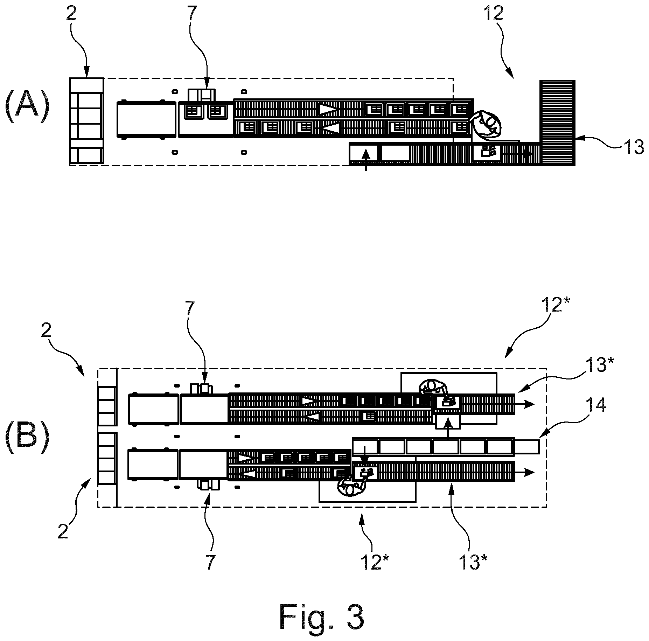

In der in Figur 3 dargestellten Variante A ist in einer Lager-Anbindungsebene (Kommissionier-Ebene) jeweils eine Kommissionierstation 12 mittels eines Doppelförderers 9 direkt an eine Gasse 3 bzw. an das eine Regal 2 mit dem Lift 7 angeschlossen.

In der in Figur 3 dargestellten Variante B sind dagegen in einer Lager-Anbindungsebene (Kommissionier-Ebene) jeweils zwei Kommissionierstationen 12* mittels jeweils eines Doppelförderers 9 direkt an eine Gasse 3 bzw. jeweils an eines der Regale 2 mit dem Lift 7 angeschlossen.

In beiden Fällen werden die Kommissionierstationen 12 von dem Lift 7 über den Doppelförderer 9 mit Ladegütern L ver- und entsorgt.

In der Variante A ist die Kommissionierstation 12 mit einem Auftragsabförderer 13 ausgestaltet, auf dem Auftragsbehälter zu- und auch nach Abarbeitung abgefördert werden.

In der Variante B dient der Auftragsabförderer 13* nur zur Abförderung nach Abarbeitung von Auftragsbehältern. Die Kommissionierstationen 12* teilen sich einen mittig zwischen ihnen angeordneten gemeinsamen Auftragsbehälterzuförderer 14.

### Bezugszeichenliste

- 1: Regallagersystem
- 2: Regal
- 3: Gasse
- 4: Shuttle
- 5: Schiene
- 6A, 6B: Pufferförderer
- 7: Lift
- 8A: Einlagerungsförderer
- 8B: Auslagerungsförderer
- 9: Doppelförderer
- 10: Liftförderer
- 11: Führung
- 12: Kommisionierstation
- 13: Auftragsabförderer
- 14: Auftragsbehälterzuförderer

## Patentansprüche

1. Regallagersystem (1) mit mehrebenen Lagerregalen (2), die zwischen sich eine Gasse (3) definieren, in der in den Lagerebenen Shuttles (4) entlang der Lagerregale (2) als Bediengeräte zum Ein- und Auslagern von Ladegütern (L) in die Lagerregale (2) fahren, wobei innerhalb der Grundfläche der Lagerregale (2) einer Gasse (3) mindestens ein Vertikallift (7) so angeordnet ist, dass die Shuttles (4) auf Schienen (5) entlang der der Gasse (3) zugewandten Regalvorderseiten an dem Vertikallift (7) vorbeifahren können und über einen neben dem Vertikallift (7) angeordneten Pufferförderer (6A, B) Ladegut (L) abgeben bzw. aufnehmen können, wobei der Pufferförderer (6A, B) Ladegut (L) an den Vertikallift (7) weiterfördert bzw. vom Vertikallift (7) übernimmt, wobei das System derart ausgestaltet ist, dass in einer im Regallagersystem enthaltenen Lager-Anbindungsebene lediglich auf einer Seite des Vertikallifts (7) Ladegüter (L) aufgegeben und auch aufgenommen werden, wobei der Vertikallift (7) einen reversierbaren Liftförderer (10) aufweist, **dadurch gekennzeichnet, dass** der Einlagerungsförderer (8A) und der Auslagerungsförderer (8B) der Lager-Anbindungsebene beide einseitig neben dem Vertikallift (7) als ein einziger Doppelförderer (9) in der Aufstandsfläche nur eines Lagerregals (2) angeordnet sind und dass der Doppelförderer (9) eine Längsteilung derart aufweist, dass eine Längshälfte zum Vertikallift (7) hin und die andere Längshälfte vom Vertikallift (7) weg in derselben Ebene fördert, und dass der Liftförderer virtuell oder physikalisch durch Führungen entsprechend der Doppelfördererteilung (9) geteilt ist und diese Teilung mit den Längshälften jeweils in der Lager-Anbindungsebene in Richtung der Längsausrichtung des Lagerregals (2) fluchtet, sodass die Hälften des Doppelförderers (9) mit den Hälften des Vertikallifts (7) fluchten, wenn sich diese auf gleicher Höhe befinden.

2. Regallagersystem nach Anspruch 1, **dadurch gekennzeichnet, dass** der Doppelförderer (9) Ladegüter (L) mit der Schmalseite (S) in Förderrichtung (F) fördert.

3. Regallagersystem nach einem der Ansprüche 1 oder 2, **dadurch gekennzeichnet, dass** der Doppelförderer (9) zwischen den Längshälften eine Führung (11) aufweist.

4. Regallagersystem nach einem der vorhergehenden Ansprüche, **dadurch gekennzeichnet, dass** in der Lager-Anbindungsebene Kommissionierstationen (12) mittels des Doppelförderers (9) direkt an die Gassen (3) bzw. Lagerregale (2) angeschlossen sind.

5. Verfahren zum Betrieb eines Regallagersystems nach einem der vorhergehenden Ansprüche, **dadurch gekennzeichnet, dass** lediglich auf einer Seite des Vertikallifts (7) in einer Lager-Anbindungsebene Ladegüter (L) in das Lagerregal (2) eingelagert bzw. daraus ausgelagert werden.

6. Verfahren nach Anspruch 5, **dadurch gekennzeichnet, dass** in einzelnen LagerEbenen beidseitig des Vertikallifts (7) angeordnete Förderer eine gleichzeitige Be- und Entladung von Ladegütern (L), insbesondere entsprechend der Teilung ermöglichen.

7. Verfahren nach Anspruch 5, **dadurch gekennzeichnet, dass** in einzelnen LagerEbenen einseitig des Vertikallifts (7) angeordnete Förderer eine gleichzeitige Be- und Entladung von Ladegütern (L), insbesondere entsprechend der Teilung ermöglichen.

## Claims

1. Rack storage system (1) comprising multi-level storage racks (2) which define therebetween an aisle (3), in which shuttles (4) travel in the storage levels along the storage racks (2) as serving units for placing/removing loads (L) into/out of the storage racks (2), wherein at least one vertical lift (7) is arranged within the floor space of the storage racks (2) of an aisle (3) in such a manner that the shuttles (4) can travel on rails (5) along the rack front sides facing the aisle (3) past the vertical lift (7) and can place down or pick up a load (L) via a buffer conveyor (6A, B) arranged next to the vertical lift (7), wherein the buffer conveyor (6A, B) conveys a load (L) onwards to the vertical lift (7) or receives same from the vertical lift (7), wherein the system is configured in such a manner that, in a storage connection level contained in the rack storage system, loads (L) are deposited and also picked up merely on one side of the vertical lift (7), wherein the vertical lift (7) has a reversible lift conveyor (10), **characterised in that** the storage conveyor (8A) and the removal conveyor (8B) of the storage connection level are both arranged on one side next to the vertical lift (7) as a single dual conveyor (9) in the contact area of only one storage rack (2) and **in that** the dual conveyor (9) has a longitudinal division such that a longitudinal half conveys towards the vertical lift (7) and the other longitudinal half conveys away from the vertical lift (7) in the same level and that the lift conveyor is divided virtually or physically by guides corresponding to the dual conveyor division (9) and this division with the longitudinal halves is aligned in each case in the storage connection level in the direction of the longitudinal orientation of the storage rack (2) and so the halves of the dual conveyor (9) are aligned with the halves of the vertical lift (7) when they are located at the same height.

2. Rack storage system as claimed in claim 1, **characterised in that** the dual conveyor (9) conveys loads (L) with the narrow side (S) in the conveying direction (F).

3. Rack storage system as claimed in any one of claims 1 or 2, **characterised in that** the dual conveyor (9) has a guide (11) between the longitudinal halves.

4. Rack storage system as claimed in any one of the preceding claims, **characterised in that**, in the storage connection level, picking stations (12) are connected directly to the aisles (3) or storage racks (2) by means of the dual conveyor (9).

5. Method for operating a rack storage system as claimed in any one of the preceding claims, **characterised in that** loads (L) are placed into or removed from the storage rack (2) merely on one side of the vertical lift (7) in a storage connection level.

6. Method as claimed in claim 5, **characterised in that** conveyors arranged in individual storage levels on both sides of the vertical lift (7) permit simultaneous loading and unloading of loads (L), in particular corresponding to the division.

7. Method as claimed in claim 5, **characterised in that** conveyors arranged in individual storage levels on one side of the vertical lift (7) permit simultaneous loading and unloading of loads (L), in particular corresponding to the division.

## Revendications

1. Système d'entrepôt à rayonnage (1) comportant plusieurs niveaux de rayonnages (2) qui définissent entre un couloir (3) dans lequel circulent des navettes (4) dans le plan d'étagère le long des étagères (2) comme appareils de service pour stocker et déstocker des produits (L) sur les étagères (2), au moins un ascenseur vertical (7) est installé dans la surface de base des étagères (2) de stockage d'un couloir (3) de façon que les navettes (4) puissent circuler sur des rails (5) le long des côtés avant des étagères tournées vers le couloir (3) en passant devant l'ascenseur vertical (7) et par un convoyeur tampon (6A, 6B) à côté de l'ascenseur vertical (7) pour distribuer ou prendre des produits (L), le convoyeur tampon (6A, B) mettant le produit (L) dans l'ascenseur vertical (7) ou le prenant de l'ascenseur vertical (7), le système étant conçu pour que dans un plan de jonction de stockage contenu dans le système d'entrepôt à rayonnage, les produits (L) peuvent être mis et aussi être pris uniquement sur un côté de l'ascenseur vertical (7), l'ascenseur vertical (7) a un convoyeur d'ascenseur (10) réversible, système **caractérisé en ce que** le convoyeur d'entrée (8A) et le convoyeur de sortie (8B) du plan de jonction de stockage, les deux sont installés d'un côté, à côté de l'ascenseur vertical (7) comme un unique convoyeur double (9) dans la surface de base de seulement une étagère (2), et le convoyeur double (9) est divisé longitudinalement pour qu'une moitié longitudinale convoie vers l'ascenseur vertical (7) et l'autre moitié longitudinale convoie à partir de l'ascenseur vertical (7), et le convoyeur d'ascenseur est divisé virtuellement ou physiquement par des guides correspondants à la double répartition de convoyage (9) et cette division est alignée sur les moitiés longitudinales respectivement dans le plan de jonction d'entrepôt dans la direction longitudinale de l'étagère (2) de façon que les moitiés du convoyeur double (9) soient alignées sur les moitiés de l'ascenseur vertical (7) lorsque celles-ci se trouvent à la même hauteur.

2. Système d'entrepôt à rayonnage selon la revendication 1, **caractérisé en ce que** le convoyeur double (9) transporte des produits (L) avec le petit côté (S) dans la direction transfert (F).

3. Système d'entrepôt à rayonnage (1) selon l'une des revendications 1 ou 2, **caractérisé en ce que** le convoyeur double (9) a un guide (11) entre les moitiés longitudinales.

4. Système d'entrepôt à rayonnage selon l'une des revendications précédentes, **caractérisé en ce que** dans le plan de jonction d'entrepôt, des postes de commissionneurs (12) du double convoyeur (9) sont directement reliés au couloir (3) ou aux étagères d'entrepôt (2).

5. Procédé de gestion d'un système d'entrepôt à rayonnage selon l'une des revendications précédentes, **caractérisé en ce que** les produits (L) sont déposés sur les étagères (2) ou sont prises de celles-ci dans le plan de jonction d'entrepôt uniquement sur un côté de l'ascenseur vertical (7).

6. Procédé selon la revendication 5, **caractérisé en ce que** dans différents plans d'entrepôt, des convoyeurs installés des deux côtés de l'ascenseur vertical (7) permettent simultanément le chargement et le déchargement de produits (L) notamment en fonction de la division.

7. Procédé selon la revendication 5, caractérisé dans les différents plans d'entrepôt, les convoyeurs installés d'un côté de l'ascenseur vertical (7) permettent un chargement et un déchargement simultané de produits (L) notamment en fonction de la division.
